# EUROPÄISCHE PATENTANMELDUNG

(11) **EP 0 716 257 A2**
(43) Veröffentlichungstag der Anmeldung: **12.06.1996**
(21) Anmeldenummer: 95118758.2
(22) Anmeldetag: 29.11.1995
(51) Int. Cl.: F16L 9/18

(54) **Doppel-D-Rohr**

(30) Priorität: 06.12.1994 DE 9419538 U
(71) Anmelder: HEINRICH GILLET GMBH & CO. KG, D-67480 Edenkoben (DE)
(72) Erfinder: Schneider, Jürgen, D-67487 St. Martin (DE)
(74) Vertreter: Patentanwälte Möll und Bitterich

(57) **Zusammenfassung**

Zur Herstellung von Doppel-D-Rohren wird ein Blechstreifen als Trennsteg (2) in einem zu einem Rohr (1), welches aus einem zu einem Zylinder gebogenen Blech besteht, mittels Laserschweißnähten (3) befestigt. Ist das Rohr (1) bereits geschlossen oder handelt es sich um ein nahtlos gezogenes Rohr, wird der Trennsteg (2) mit einem geringen Übermaß hergestellt. Zum Einschieben des Trennstegs (2) in das Rohr (1) wird dieses mit einer geeigneten Presse federnd elliptisch verformt. Nach dem Lösen der Presse legt sich das Rohr (1) eng an die beiden Längskanten des Trennstegs (2) an, was eine optimal dichte Herstellung der Laserschweißnähte (3) ermöglicht.

## Beschreibung

Die Erfindung betrifft Doppel-D-Rohre gemäß dem Oberbegriff des Anspruchs 1.

Doppel-D-Rohre sind handelsüblich. Sie bestehen beispielsweise aus zwei Rohren mit halbkreisförmigem Querschnitt, die mit ihren flachen Seiten aufeinandergelegt und an den Längskanten mittels Schweißnaht miteinander verbunden sind. Um zu verhindern, daß Gase oder Flüssigkeiten in den Spalt zwischen den aufeinanderliegenden Flachseiten eindringen, werden auch die beiden Stirnseiten miteinander verschweißt.

Mehrfach-Rohre lassen sich auch auf andere Art herstellen. So zeigt z. B. die EP 0 330 759 ein Dreifach-Rohr, bei dem rechteckige Einzelrohre mittels Nut und Feder in Schwalbenschwanzform miteinander verbunden sind.

Die handelsüblichen Doppel-D-Rohre haben sich in vielen Bereichen der Technik und des Anlagenbaus bewährt. Der Versuch, sie auch in Abgasanlagen von Kraftfahrzeugen mit Verbrennungsmotor einzusetzen, war jedoch nicht von Erfolg gekrönt, da sich zu viele Nachteile einstellten. Dies sind: relativ hohes Gewicht infolge der doppelten Materialstärke der ebenen Wandbereiche, erschwerte Verarbeitung beim Biegen der Rohre durch die doppelte Materialstärke der ebenen Wandbereiche und durch die zusätzlich versteifende Wirkung der beiden Schweißnähte und eine unerwartet starke Aufheizung der ebenen Wandbereiche durch die heißen Motorabgase. Diese letztgenannte Erscheinung ist Ursache für den Hauptnachteil der herkömmlichen Doppel-D-Rohre: Aufgrund der starken Erhitzung dehnt sich das in dem allseitig zugeschweißten Spalt zwischen den beiden ebenen Wandteilen eingesperrte Gas stark aus und führt zur Bildung von Beulen, die den freien Strömungsquerschnitt in den beiden Rohrhälften reduzieren. Dadurch steigt der Druckverlust der Abgasanlage an und die Motorleistung sinkt.

Der vorliegenden Erfindung liegt daher die Aufgabe zugrunde, Doppel-D-Rohre anzugeben, welche nur minimales Gewicht besitzen, möglichst einfach herzustellen sind und sich auch gut weiterverarbeiten, z. B. biegen lassen.

Diese Aufgabe wird gelöst durch Doppel-D-Rohre mit den Merkmalen des Anspruchs 1.

Die erfindungsgemäße Rohrkonstruktion verwendet nur minimale Materialmengen. Der Wärmeübergang zwischen den beiden Rohrhälften ist optimal. Verschlossene Spalte, in denen sich Drücke aufbauen könnten, sind nicht mehr vorhanden. Die Laserschweißung arbeitet ohne Materialauftrag, so daß die Außenkontur des Rohrs unverändert bleibt und die optimale Weiterverarbeitung der Rohre insbesondere durch Biegen gewährleistet ist.

Gemäß einer ersten Ausgestaltung der Erfindung ist das Rohr verschweißt. Prinzipiell ist auch die Verwendung von nahtlos gezogenen Rohren möglich ist. Der Trennsteg besitzt ein geringes übermaß und ist im Inneren des Rohrs eingeklemmt. Zum Einschieben des Trennstegs wird das Rohr mit einer Presse federnd elliptisch verformt; dieser sitzt daher nach Wegnehmen des Preßdrucks völlig spaltlos im Rohrinneren, so daß optimale Bedingungen für die Herstellung der Laserschweißnähte gegeben sind.

Gemäß einer alternativen Ausführungsform ist das Rohr offen, d. h. es besteht aus einem zylindrisch gebogenen Blechstück. Der Trennsteg besitzt wieder ein geringes übermaß. Seine eine Längskante liegt genau an der Stoßkante des Rohrs an. Bei dieser Variante erfolgen das Zuschweißen des Rohrs und das Festschweißen der einen Längskante des Trennstegs in einem einzigen Arbeitsgang.

Das erfindungsgemäße Prinzip bietet darüber hinaus die Möglichkeit, für Rohr und Trennsteg unterschiedliche Materialien und/oder Wandstärken zu verwenden.

Anhand der Zeichnung soll die Erfindung näher erläutert werden. Es zeigen
- Fig. 1: eine perspektivische Darstellung eines ersten Ausführungsbeispiels und
- Fig. 2: eine perspektivische Darstellung eines zweiten Ausführungsbeispiels.

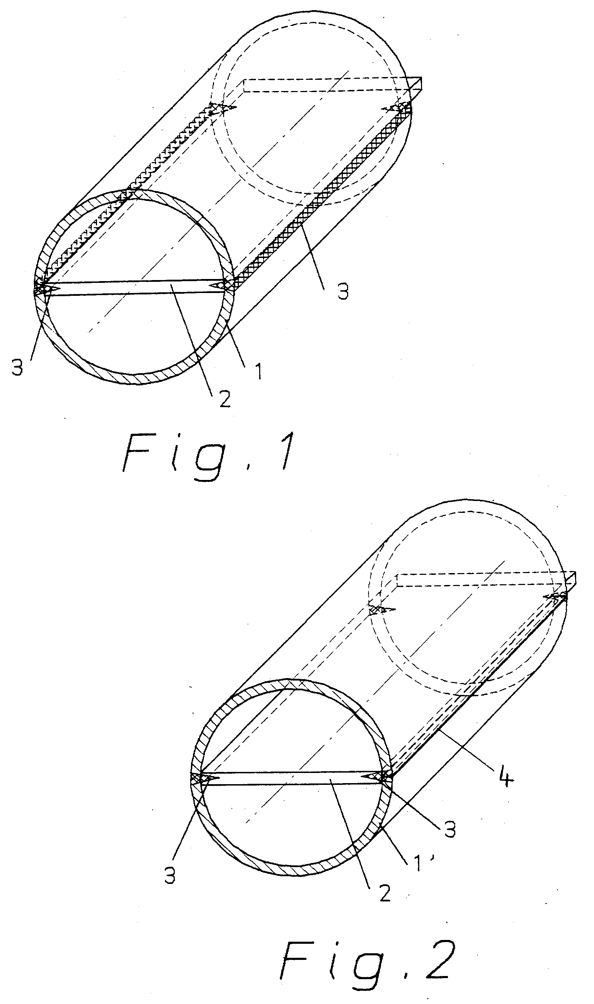

Fig. 1 zeigt ein erstes Doppel-D-Rohr, hergestellt aus einem geschlossenen, kreiszylindrischen Rohr 1 mit einem eingesetzten ebenen Blechstreifen als Trennsteg 2. Zum Einschieben des Trennstegs 2 wird das Rohr 1 zunächst mit Hilfe einer geeigneten Presse federnd elliptisch verformt, so daß der Trennsteg 2 mit übermaß eingeschoben werden kann. Nach Wegnehmen der Preßkräfte nimmt das Rohr 1 seine ursprüngliche Form wieder an und klemmt den Trennsteg 2 an den Längskanten fest.

Anschließend werden Rohr 1 und Trennsteg 2 entlang ihrer Berührungsflächen von außen mittels Laser verschweißt. Die Laserschweißnähte 3 verändern weder die Form noch das Materialgefüge nachteilig.

Fig. 2 zeigt eine Variante. Hier handelt es sich um ein aus einem Blech gebogenes Rohr 1', dessen Längskanten zunächst nicht miteinander verschweißt werden. In das offene Rohr 1' ist ein ebener Blechstreifen als Trennsteg 2 so eingeschoben, daß seine eine Längskante genau an der Stoßkante 4 anliegt. Seine andere Längskante berührt das Rohr 1' von innen. Beim Anbringen der Laserschweißnähte 3 wird gleichzeitig das Rohr 1' geschlossen und der Trennsteg 2 fixiert.

Es versteht sich, daß erfindungsgemäße Doppel-D-Rohre nicht nur mit kreisförmigem Querschnitt, sondern mit beliebigen, d. h. beispielsweise quadratischen oder rechteckigen Querschnitten hergestellt werden können.

## Patentansprüche

1. Doppel-D-Rohr, gekennzeichnet durch die Merkmale:
- das Rohr (1, 1') besteht aus einem zu einem Zylinder gebogenen Blech,
- ein Blechstreifen, eingeschoben in das Rohr (1, 1'), bildet einen Trennsteg (2),
- der Trennsteg (2) besitzt ein übermaß,
- Rohr (1, 1') und Trennsteg (2) sind mittels Laserschweißnähten (3) miteinander verbunden.

2. Doppel-D-Rohr nach Anspruch 1, gekennzeichnet durch die Merkmale:
- das Rohr (1) ist geschlossen,
- der Trennsteg (2) ist im Inneren des Rohrs (1) eingeklemmt.

3. Doppel-D-Rohr nach Anspruch 1, gekennzeichnet durch die Merkmale:
- das Rohr (1') ist an der Stoßkante (4) offen,
- eine Längskante des Trennstegs (2) liegt an der Stoßkante (4) an.

4. Doppel-D-Rohr nach Anspruch 1, 2 oder 3, gekennzeichnet durch das Merkmal:
- Material und/oder Wandstärke von Rohr (1, 1') und Trennsteg (2) sind unterschiedlich.
